# DEMANDE DE BREVET EUROPEEN

(11) **EP 0 616 454 A1**
(43) Date de publication de la demande: **21.09.1994**
(21) Numéro de dépôt: 94200598.4
(22) Date de dépôt: 09.03.1994
(51) Int. Cl.: H04L 27/34

(54) **Système de transmission numérique à multirésolution**

(30) Priorité: 17.03.1993 FR 9303087
(71) Demandeur: LABORATOIRES D'ELECTRONIQUE PHILIPS S.A.S., 94450 Limeil-Brévannes (FR); Philips Electronics N.V., 5621 BA Eindhoven (NL)
(72) Inventeur: Daffara, Flavio, F-75008 Paris (FR); Lamour, Jacqueline, F-75008 Paris (FR)
(74) Mandataire: Landousy, Christian

(57) **Abrégé**

Système de transmission numérique à multirésolution apte à discriminer un premier niveau de résolution faible par détection de groupes de symboles ainsi qu'au moins un second niveau de résolution élevée par détection de symboles dans les groupes de symboles. Le système comprend un émetteur (5) muni de moyens (14,16,18) pour moduler différentiellement les groupes de symboles affectés au niveau de résolution faible et un récepteur (6) muni de moyens pour détecter (20) des groupes de symboles modulés différentiellement et fournir des symboles détectés affectés au niveau de résolution faible. Dans un mode plus performant de fonctionnement, les moyens de détection du récepteur peuvent détecter des symboles affectés au niveau de résolution élevée. Le système peut être utilisé pour une transmission numérique de signaux de télévision à double résolution.
Application: transmissions numériques à double résolution; télévision numérique.

## Description

L'invention concerne un système de transmission numérique a multirésolution mettant en oeuvre des symboles d'une constellation, le système étant apte à discriminer un premier niveau de résolution faible par détection de groupes de symboles ainsi qu'au moins un second niveau de résolution élevée par détection de symboles dans les groupes de symboles, le système comprenant un émetteur de signaux numériques modulés par lesdits symboles et un récepteur de signaux numériques pour détecter lesdits symboles.

Elle concerne également un émetteur et un récepteur de signaux numériques mis en oeuvre dans un tel système.

Pour certaines applications en transmission numérique, il peut être intéressant de pouvoir discriminer plusieurs niveaux de résolution en fonction des conditions de réception et de sélectionner un niveau de résolution en fonction des conditions de transmission et/ou de réception plus ou moins bruitées observées au niveau du récepteur. Ce choix peut également être effectué en relation avec des critères de qualité, un récepteur apte a discriminer un niveau de résolution élevée offrant une qualité de réception supérieure à un récepteur apte à discriminer un niveau de résolution inférieure. Les mises en oeuvre a l'émission doivent par ailleurs être adaptées à ces possibilités en particulier en ce qui concerne la puissance émise qui doit répondre simultanément aux exigeances de chaque niveau de résolution.

Un système de transmission numérique utilisant une modulation à multirésolution offre une telle possibilité.

Un système de transmission numérique a multirésolution est décrit dans le document "Multiresolution source and channel coding for digital broadcast of HDTV", K.M.UZ, K. RAMCHANDRAN, M. VETTERLI, Proceeding of the Fourth International Workshop on HDTV Torino Italy, p. 1-7, 1991.

Ce document ne décrit rien explicitement permettant de connaître le fonctionnement du modulateur et du démodulateur permettant de détecter les symboles de la constellation à multirésolution. On peut inférer que chaque symbole reçu est identifié par sa phase absolue et par son module et qu'une détection cohérente basée sur la partition de la constellation est opérée pour obtenir la multirésolution.

Mais un tel système fait apparaître une ambiguïté de phase qui, à la réception, nécessite un traitement spécifique supplémentaire. Un des buts de l'invention est de disposer d'un système transparent à cette ambiguïté de phase.

C'est un objet de l'invention de fournir un système de transmission numérique à multirésolution dans lequel l'émetteur comprend des moyens pour moduler différentiellement les groupes de symboles affectés au niveau de résolution faible (modulation semidifférentielle) et en ce que le récepteur comprend des moyens de détection pour détecter des groupes de symboles reçus modulés différentiellement et pour fournir des symboles détectés affectés au niveau de résolution faible.

Ainsi avantageusement, l'émetteur émet des symboles modulés semidifférentiellement qui peuvent être détectés avec au moins deux niveaux de résolution. Dans un premier mode de réalisation, le récepteur peut sélectionner uniquement le niveau de résolution le plus faible en détectant des groupes de symboles.

Pour effectuer une détection des groupes de symboles, les moyens de détection peuvent effectuer une détection différentielle des groupes de symboles ou une détection cohérente des groupes de symboles suivie d'un décodage différentiel.

Avantageusement, on lève ainsi l'ambiguïté de phase pour la détection du niveau de résolution faible.

En outre, dans un second mode de réalisation, les moyens de démodulation peuvent effectuer additionnellement une détection cohérente des symboles des groupes de symboles pour fournir des symboles détectés ressortissant au second niveau de résolution.

La détection différentielle des groupes de symboles est plus facile à mettre en oeuvre qu'une détection cohérente qui nécessite d'estimer la phase absolue de chaque symbole reçu.

Préférentiellement, on combine, a l'émission, des premières symboles appartenant à une première constellation à modulation de phase avec des seconds symboles appartenant à une seconde constellation quelconque mais d'énergie atténuée par rapport à la première constellation. En ajoutant les symboles de la seconde constellation aux symboles de la première constellation, on forme une constellation résultante à symboles non équidistants. Ainsi, par exemple en combinant une constellation QPSK avec une autre constellation QPSK atténuée, on construit une constellation résultante MAQ 16 à symboles non équidistants. En affectant à la première constellation 2 bits par symbole et en affectant à la seconde constellation 2 bits par symbole également, on peut ainsi éclater chacun des premiers symboles en quatre symboles. Les premiers symboles deviennent ainsi des groupes de symboles. En détectant les groupes de symboles, on récupère les 2 bits du premier niveau, et en détectant additionnellement les symboles a l'intérieur de chaque groupe de symboles on récupère les 2 bits du second niveau.

Plus généralement, pour combiner à l'émission n premiers bits associés au premier niveau avec m seconds bits associés au second niveau, on met en oeuvre préférentiellement une unité d'affectation binaire qui est adressée simultanément par les n premiers bits et par les m seconds bits et qui délivre 2^{n+m} symboles de la constellation à multirésolution.

Les symboles sont ensuite transmis par un canal de transmission a l'aide d'une ou plusieurs porteuses modulées numériquement par les symboles. L'émetteur et le récepteur possèdent donc des moyens pour respectivement moduler et démoduler la ou les porteuses.

Le codage différentiel sur les n bits du premier niveau mis en oeuvre à l'émission permet, à la réception, de récupérer les n bits du premier niveau par une détection différentielle. Ceci présente l'avantage d'être plus facile à mettre en oeuvre qu'une détection cohérente qui nécessite de mesurer la phase absolue de chaque symbole reçu. Néanmoins une détection cohérente est possible.

La détection différentielle des groupes de symboles du premier niveau de résolution permet de s'affranchir du problème de l'estimation du déphasage entre émetteur et récepteur. De plus, la modulation semidifférentielle permet de s'affranchir du problème de l'ambiguïté de phase pouvant exister entre l'émetteur et le récepteur. Cette ambiguïté de phase est multiple de 2π/k où k est le nombre de groupes de symboles du premier niveau de résolution. Pour la modulation MAQ 16 précédemment citée, cette ambiguïté est de π/2. On peut, en outre, déterminer l'affectation binaire pour maintenir une invariance rotationnelle des symboles dans les groupes de symboles pour des rotations de phase de π/2 pour la constellation MAQ 16 précitée ou 2π/k dans un cas plus général et enlever ainsi l'ambiguïté de phase pour les symboles dans les groupes de symboles.

Ces différents aspects de l'invention et d'autres encore seront apparents et élucidés à partir des modes de réalisation décrits ci-après.

L'invention sera mieux comprise a l'aide de figures suivantes données à titre d'exemples non limitatifs qui représentent :
Figure 1 : une représentation des mécanismes de construction d'une constellation MAQ 16 à symboles non équidistants à partir de deux constellations QPSK.
Figure 2 : un schéma d'un émetteur à modulation semi-différentielle à deux niveaux de résolution selon l'invention.
Figure 3 : un schéma d'un récepteur a détection semi-différentielle à deux niveaux de résolution selon l'invention.
Figure 4 : deux schémas pour une détection des groupes de symboles du niveau de résolution faible.

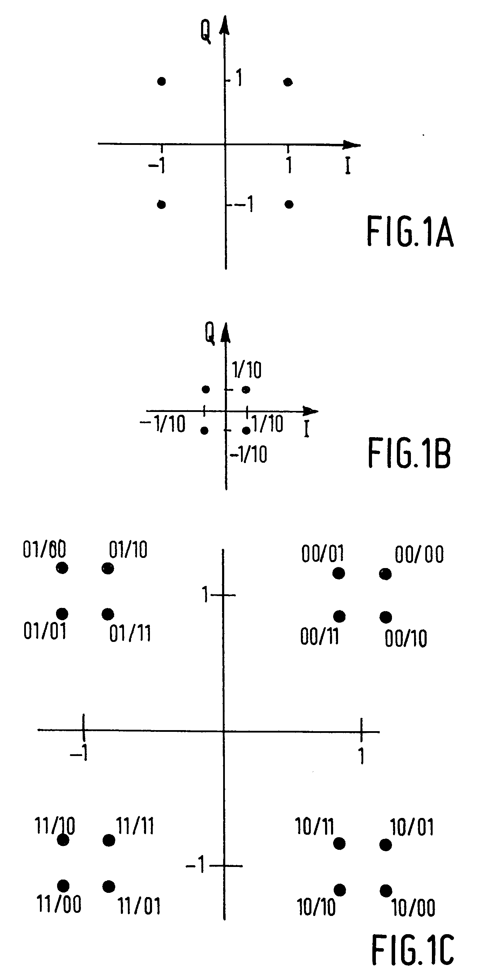

La figure 1 représente, à titre d'exemple, la combinaison de deux constellations QPSK pour former une constellation résultante MAQ 16 (n = m = 2) à symboles non équidistants. La figure 1-A représente une première constellation QPSK formée de quatre symboles (1,1) (1,-1) (-1, 1) (-1, -1) dans un diagramme I/Q, en phase/en quadrature. A cette première constellation sont affectés les 2 bits du premier niveau NR de résolution faible. La figure 1-B représente une seconde constellation QPSK formée de quatre symboles (1/10, 1/10), (1/10, - 1/10), (- 1/10, 1/10), (- 1/10, - 1/10). A cette seconde constellation sont affectés les 2 bits du second niveau ER de résolution élevée. En additionnant ces deux constellations, on obtient la constellation résultante représentée sur la figure 1-C. Cette constellation résultante constitue une constellation MAQ 16 à symboles non équidistants. Les symboles d'un même quadrant forment un groupe de symboles a l'intérieur duquel on peut détecter le second niveau de résolution. Les quatre groupes, considérés en tant que groupes, servent à détecter le premier niveau de résolution.

Tous les symboles d'un même groupe sont ainsi affectés d'un premier couple de bits (b₀,b₁) pour le premier niveau de résolution, et a l'intérieur d'un même groupe, chaque symbole est affecté d'un second couple de bits (b₂,b₃) propre au second niveau de résolution. Un exemple de choix d'affectation de bits aux symboles est représenté sur la figure 1-C où l'on constate que les quatre symboles du premier quadrant sont associés aux bits suivants (b₀,b₁/b₂,b₃) :
00/00 00/01 00/10 00/11
Les symboles des autres quadrants possèdent d'autres mots binaires qui se déduisent par analogie.

Sur la figure 1-C, les quatre symboles les plus proches de l'origine possèdent tous le même second couple de bits b₂,b₃, soit 11. Ce choix du second couple de bits permet de conserver l'invariance rotationnelle des symboles vis à vis du second niveau de résolution. Cette propriété apparaît également pour les autres classes de symboles constituées de 4 symboles obtenus par rotation de π/₂ d'un symbole appartenant au groupe de symboles du premier quadrant.

### Emetteur

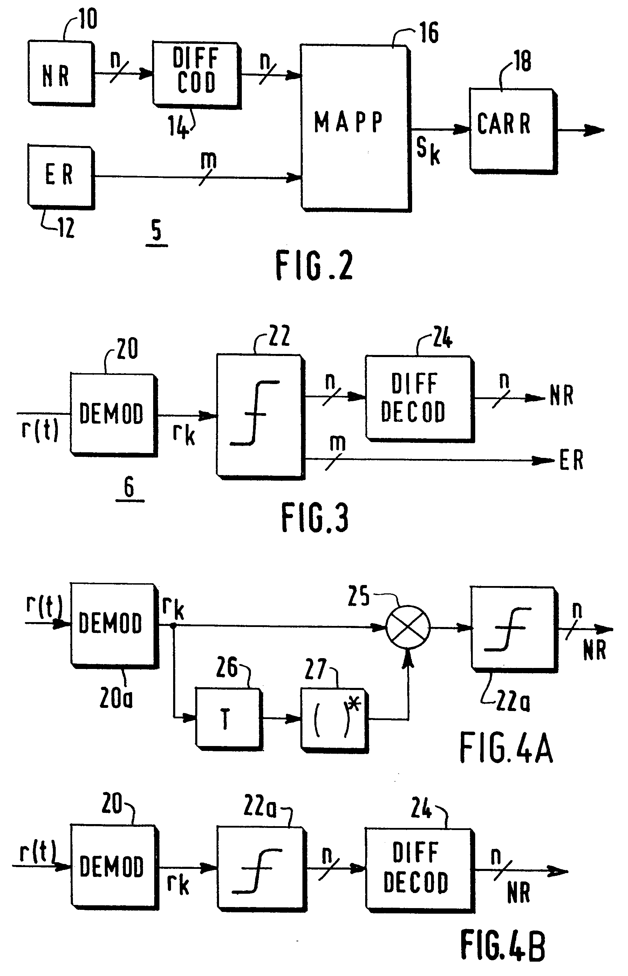

Selon l'invention, à l'émission, les groupes de symboles sont modulés différentiellement. La figure 2 représente le fonctionnement de l'émetteur 5 pour la formation des symboles sₖ en bande de base à émettre sur un canal de transmission.

L'émetteur comprend une première source 10 des n bits affectés au premier niveau NR de résolution et une seconde source 12 des m bits affectés au second niveau ER de résolution.

Pour coder différentiellement les n bits, ceux-ci sont introduits dans un codeur différentiel 14. Les n bits codés différentiellement et les m bits issus de la seconde source 12 sont utilisés en tant qu'adresses d'un organe d'affectation binaire 16 MAPP qui délivre 2^{m+n} symboles sₖ correspondant à la constellation à multirésolution (MAQ 16 non équidistant à titre d'exemple). Les symboles sₖ sont ensuite modulés par une ou plusieurs porteuses par des moyens de modulation 18 CARR et émis vers un récepteur à travers un canal de transmission.

### Récepteur

Selon l'invention, le récepteur peut être conçu pour récupérer les bits correspondant soit uniquement au niveau de résolution faible soit aux niveaux de résolution faible et élevée.

Selon un premier mode de réalisation représenté sur la figure 3, le récepteur 6 récupère des symboles rₖ par un dispositif 20 de démodulation cohérente et d'échantillonnage. Les symboles rₖ sont introduits dans un organe 22 de décision qui affecte des bits aux symboles rₖ suivant des régions de décision. On récupère n+m bits correspondant aux deux niveaux de résolution :
- les n bits du niveau NR de résolution faible
- et les m bits du niveau ER de résolution élevée.

Les n bits du flux NR sont décodés différentiellement dans un décodeur différentiel 24 DIFF DECOD.

Le dispositif de démodulation utilise un oscillateur asservi en fréquence et en phase (détection cohérente).

Dans le cas d'un récepteur prévu pour ne recevoir que le niveau de résolution faible, les schémas se simplifient selon la figure 4. La figure 4-A représente un schéma d'un récepteur effectuant une détection différentielle. La figure 4-B représente un schéma d'un récepteur effectuant une détection cohérente.

Dans le cas du récepteur à détection différentielle (Figure 4-A), les symboles rₖ, issus d'un dispositif 20a de démodulation et d'échantillonnage, arrivent sur une première entrée d'un multiplieur 25 et également sur un retardateur 26 suivi d'un dispositif 27 donnant en sortie le symbole conjugué du symbole complexe introduit sur son entrée. Le symbole conjugué obtenu est introduit sur une seconde entrée du multiplieur 25. La sortie du multiplieur sert à adresser un organe 22a de décision qui fournit les n bits relatifs au niveau de résolution faible. Dans le cas du récepteur a détection différentielle, le dispositif 20a de démodulation utilise un oscillateur qui n'a besoin que d'être asservi en fréquence car la détection est effectuée différentiellement.

Dans le cas du récepteur à détection cohérente (Figure 4-B), le dispositif 20 de démodulation utilise un oscillateur asservi à la fois en fréquence et en phase pour effectuer une détection cohérente de symboles modulés semidifférentiellement à l'émission. Les symboles rₖ issus du dispositif 20 entrent dans un organe de décision 22a analogue à celui de la figure 4-A. Les n bits en sortie de l'organe de décision 22a sont ensuite décodés différentiellement par le décodeur différentiel 24 DIFF DECOD qui délivre les n bits relatifs au niveau NR de résolution faible.

La technique de modulation semidifférentielle et les techniques de détection qui viennent d'être décrites peuvent être appliquées à une transmission à monoporteuse ou à multiporteuses. Elles peuvent ainsi être appliquées à une transmission à multiporteuses par répartition multiplexée de fréquences orthogonales (OFDM).

## Revendications

1. Système de transmission numérique à multirésolution mettant en oeuvre des symboles d'une constellation, le système étant apte à discriminer un premier niveau de résolution faible par détection de groupes de symboles ainsi qu'au moins un second niveau de résolution élevée par détection de symboles dans les groupes de symboles, le système comprenant un émetteur (5) de signaux numériques modulés par lesdits symboles et un récepteur (6) de signaux numériques pour détecter lesdits symboles, caractérisé en ce que l'émetteur (5) comprend des moyens (14, 16, 18) pour moduler différentiellement les groupes de symboles affectés au niveau de résolution faible et en ce que le récepteur (6) comprend des moyens de détection pour détecter (20) des groupes de symboles reçus modulés différentiellement et pour fournir (22, 24) des symboles détectés affectés au niveau de résolution faible.

2. Système selon la revendication 1 caractérisé en ce que les moyens de détection effectuent additionnellement une détection cohérente des symboles des groupes de symboles pour fournir des symboles détectés affectés au niveau de résolution élevée.

3. Système selon les revendications 1 ou 2 caractérisé en ce que la détection desdits groupes de symboles est une détection différentielle (20a).

4. Système selon les revendications 1 ou 2 caractérisé en ce que la détection desdits groupes de symboles est une détection cohérente (20).

5. Système selon une des revendications 1 à 4 caractérisé en ce que les moyens pour moduler différentiellement les groupes de symboles comprennent :
- un codeur différentiel (14) qui code des premiers bits ressortissant au niveau de résolution faible,
- et un organe (16) d'affectation binaire qui combine les bits codés différentiellement par le codeur différentiel avec des seconds bits ressortissant au niveau de résolution élevée.

6. Système selon la revendication 5 caractérisé en ce que l'organe d'affectation binaire impose une invariance des bits associés au niveau de résolution élevée pour des rotations de phase multiples d'une ambiguïté de phase de la constellation associée au niveau de résolution faible.

7. Système selon une des revendications 1 a 6 caractérisé en ce que les moyens de détection comprennent un organe de décision fournissant plusieurs flux numériques ressortissant aux différents niveaux de résolution.

8. Système selon les revendications 1 à 7 caractérisé en ce que les symboles associés au niveau de résolution faible combinés aux symboles associés au niveau de résolution élevée forment une constellation MAQ à symboles non équidistants.

9. Système selon une des revendications 1 à 8 caractérisé en ce que les symboles sont transmis sur plusieurs porteuses.

10. Emetteur pour une mise en oeuvre dans un système selon une des revendications 1 à 9.

11. Récepteur pour une mise en oeuvre dans un système selon une des revendications 1 à 9.
